# EUROPEAN PATENT APPLICATION

(11) **EP 2 587 692 A1**
(43) Date of publication of application: **01.05.2013**
(21) Application number: 11797503.7
(22) Date of filing: 09.03.2011
(51) Int. Cl.: H04B 7/26

(54) **METHOD, DEVICE AND SYSTEM FOR PROCESSING TRANSMISSION GAP PATTERN SEQUENCE**

(30) Priority: 22.06.2010 CN 201010211325
(71) Applicant: ZTE Corporation, Shenzhen, Guangdong 518057 (CN)
(72) Inventor: KE, Yazhu, Guangdong 518057 (CN); CHENG, Xiang, Guangdong 518057 (CN); LIU, Lin, Guangdong 518057 (CN)
(74) Representative: Brunner, John Michael Owen
(86) International application number: PCT/CN2011/071656
(87) International publication number: WO 2011/160472

(57) **Abstract**

The present invention discloses a method, device and system for processinga transmission gap pattern sequence, wherein the method comprises: during a process of a node B and a terminal using a first transmission gap pattern sequence to generate transmission gaps, the node B receives a message for indicating a second transmission gap pattern sequence from a radio network controller (S202); the node B compares a priority of the first transmission gap pattern sequence with that of the second transmission gap pattern sequence (S204); the node B and the terminal use a transmission gap pattern sequence corresponding to a higher priority indicated by a comparison result to generate transmission gaps (S206). The present invention can ensure the terminal to execute the compressed mode-based inter-carrier frequency measurement or inter-system measurement, and guarantee the performance of the system equipment and the communication of the terminal.

## Description

### Field of the Invention

The present invention relates to the communication field, and more specifically to a method, device and system for processing a transmission gap pattern sequence.

### Background of the Invention

With the evolvement of the radio network communication technology, from the second generation Global System for Mobile communication (GSM) to the third generation Wideband Code Division Multiple Access (WCDMA) system, then to the third Enhanced Universal Radio Access (E-UTRA) system, according to users' demands, multiple systems coexist in the network deployment of operators. At present, the radio network functions of the operators are usually provided like this: the second generation GSM system is mainly used for carrying the voice; the third generation WCDMA system is mainly used for carrying Packet Switched (PS) domain services, conversational services and video services; and the third generation E-UTRAN system is mainly used for carrying super-speed PS domain services.

Therefore, according to the current network deployment, the mobility between the second generation GSM system and the third generation ECDMAsystem is very important Moreover, in the near future, the mobility management of the third generation E-UTRA system, for example, switching to the hot spot region of the E-UTRA system, will also become important. At the same time, the inter-frequency switching based on the load balancing among carrier frequencies of respective layers is also necessary in a multi-carrier frequency network.

The switching process caused by the above mobility management among the systems and the load balancing among carrier frequencies of respective layers all require the measurement for the target system and the target carrier frequency in the prior switching preparatory stage so as to make an accurate switching decision.

A compressed mode plays an important role in the inter-carrier frequency measurement and inter-system measurement. When the compressed mode is adopted, the terminal can measure the non-serving carrier frequencies and the carrier frequencies of other systems without any need to be configured with dual receivers. When a terminal configured with only one receiver moves from the third generation WCDMA system to the area only covered with the second generation GSM system, it can only adopt the compressed mode to perform the inter-system measurement. Likewise, the compressed mode can also be used for the terminal which moves into or out of the area covered with the multi-carrier frequencies of the third generation WCDMA system. In the compressed mode, the terminal can perform measurement of another non-serving carrier frequency without losing any data transmitted on the serving carrier frequency.

The compressed mode is defined as a transmission mode through which the data transmission will be compressed in the time domain and a transmission gap will be generated. The receiver of the terminal can tune to another carrier frequency to perform measurement by using this transmission gap.

The transmission gap is generally described and determined by a transmission gap pattern sequence. Each set of the transmission gap pattern sequence is uniquely identified by a transmission gap pattern sequence identifier. Each set of the transmission gap pattern sequence can only be used for one kind of transmission gap pattern sequence measurement purpose, namely one of the measurement purposes of Frequency-Division Duplex measurement, Time-Division Duplex measurement, GSM Carrier Received Signal Strength Indication (RSSI) measurement, initial identification of GSM Base Station Identity Code (BSIC), reconfirmation of GSM Base Station Identity Code (BSIC) identification, multi-carrier frequency measurement, E-UTRA measurement and so on.

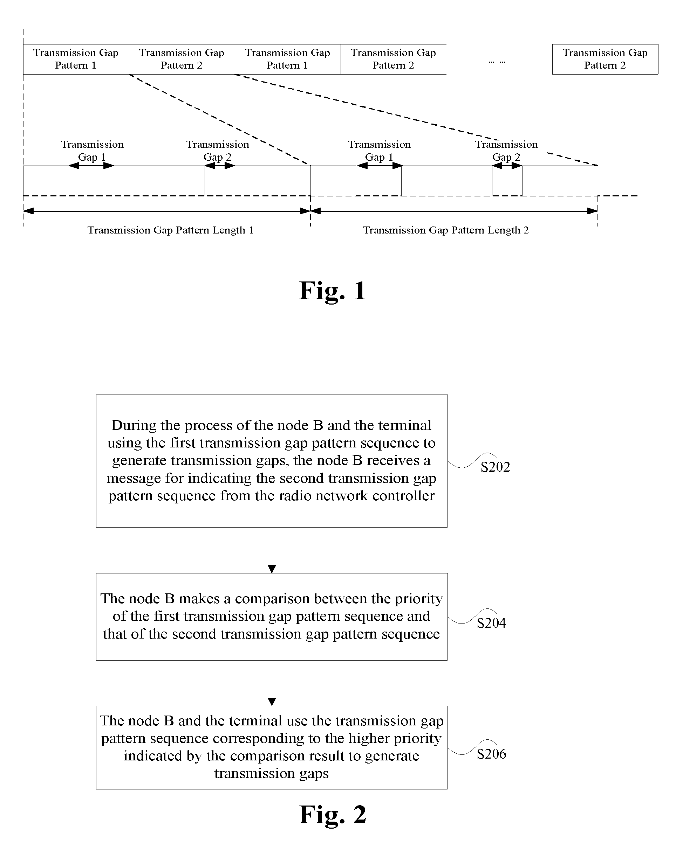

Fig. 1 is a schematic diagram of the transmission gap pattern sequence according to the related art. In Fig. 1, each set of transmission gap pattern sequence comprises two kinds of alternate transmission gap patterns, i.e. Transmission Gap Pattern 1 and Transmission Gap Pattern 2. Each kind of transmission gap pattern provides one or two transmission gaps within one transmission gap pattern length. In addition, each set of transmission gap pattern sequence also comprises a transmission gap Connection Frame Number (CFN) indicating the start/stop time of the compressed mode, and repetition times of the transmission gap pattern, etc. These parameters are all determined according to the transmission gap pattern sequence measurement purpose.

Considering that when a large number of terminals appear in one cell, the available resources of the cell may be insufficient to guarantee the Quality of Service (QoS) of all services of all terminals and thus congestion or overbad will be caused. In the related art, the load balancing mechanism, that is, to balance the service to adjacent cells with low load, can be adopted to cope with cell congestion or overload. This method can realize the purpose of balancing services with low costs to the adjacent cells with low load. When load balancing is required to be performed among different nodes B or different systems, only a radio network controller can make the decision of load balancing according to the cell's load information and prepare the compressed mode that must be started during the inter-frequency switching or inter-system switching based on the decision to perform the inter-frequency measurement or inter-system measurement.

Considering that the switching reliability can be increased by speeding up the switching process, especially in the area where the radio signal quality is deteriorating rapidly, the risk of the user's call drop can be reduced by speeding up the switching process, In order to improve the system capacity and user throughput, the later the compressed mode is started, the better it is; and the shorter the duration time of the compressed mode is, the better it is. As a result, the terminal can judge the radio signal quality of the current serving cell is not good and then apply to a node B for starting the compressed mode to measure the adjacent cells among carrier frequencies/systems, and the node B can control the start/stop of the compressed mode. Correspondingly, when the node B determines to start/stop the compressed mode, the node B will inform the terminal of the start/stop transmission gap pattern sequence.

Therefore, the compressed mode has to be started between the terminal and the node B to perform the measurement due to the poor radio signal quality of the current serving cell. When the terminal and the node B start the compressed mode, transmission gaps will be generated according to the transmission gap pattern sequence. When the terminal and the node B stop the compressed mode, the transmission gap pattern sequence is stopped.

However, when the technology above is applied in engineering, the following conflict problem between the compressed modes started is probably caused. The terminal has applied to the node B for starting the compressed mode to measure the adjacent cells among carrier frequencies due to the poor radio signal quality, and the node B has controlled the terminal to start the compressed mode with the purpose of inter-carrier frequency measurement. In addition, the radio network controller informs the node B to start the compressed mode with the purpose of inter-system measurement for the execution of loadbalancing. As a result, there is a conflict between two sets of compressed modes on the node B, which makes the terminal fail in the execution of inter-carrier frequency measurement or inter-system measurement based on the compressed mode, and finally affects the performance of the system equipment because the system load can not be reduced; besides, it will also cause the terminal to fail in the timely switching and drop calls will occur.

### Summary of the Invention

The present invention is put forward for the conflict problem of compressed modes started by the node B in the related art. In view of this, the present invention provides a method, device and system for processing transmission gap pattern sequence so as to solve the above-mentioned problem.

A method for processing transmission gap pattern sequence is provided according to one aspect of the present invention.

The method for processing a transmission gap pattern sequence according to the present invention comprises: during a process of a node B and a terminal using a first transmission gap pattern sequence to generate transmission gaps, the node B receiving a message for indicating a second transmission gap pattern sequence from a radio network controller; the node B comparing a priority of the first transmission gap pattern sequence with that of the second transmission gap pattern sequence; and the node B and the terminal using a transmission gap pattern sequence corresponding to a higher priority indicated by a comparison result to generate transmission gaps.

Preferably, if the comparison result indicates that the priority of the second transmission gap pattern sequence is higher than that of the first transmission gap pattern sequence, the step of the node B and the terminal using the transmission gap pattern sequence corresponding to the higher priority indicated by the comparison result to generate transmission gaps comprises: the node B sending, to the terminal, a message for indicating to use the second transmission gap pattern sequence to generate transmission gaps; the node B and the terminal stopping using the first transmission gap pattern sequence to generate transmission gaps; and the node B and the terminal using the second transmission gap pattern to generate transmission gaps.

Preferably, after the step of the node B comparing the priority of the first transmission gap pattern sequence with that of the second transmission gap pattern sequence, the method further comprises: the node B informing the radio network controller that an operation that the node B and the terminal use the second transmission gap pattern sequence to generate transmission gaps is started successfully.

Preferably, if the comparison result indicates that the priority of the first transmission gap pattern sequence is higher than that of the second transmission gap pattern sequence, the step of the node B and the terminal using the transmission gap pattern sequence corresponding to the higher priority indicated by the comparison result to generate transmission gaps comprises: the node B and the terminal continuing using the first transmission gap pattern sequence to generate transmission gaps.

Preferably, after the step of the node B comparing the priority of the first transmission gap pattern sequence with that of the second transmission gap pattern sequence, the method further comprises: the node B informing the radio network controller that an operation that the node B and the terminal use the second transmission gap pattern sequence to generate transmission gaps fails to be started.

Preferably, before the process of the node B and the terminal using the first transmission gap pattern to generate transmission gaps, the method further comprises: the node B, the terminal and the radio network controller determining the priorities of the first transmission gap pattern sequence and the second transmission gap pattern sequencein advance.

Preferably, the step of the node B, the terminal and the radio network controller determining the priorities of the first transmission gap pattern sequence and the second transmission gap pattern sequence in advance comprises: the radio network controller sending the priorities of the first transmission gap pattern sequence and the second transmission gap pattern sequence to the terminal through a control signaling of a radio resource control protocol layer; and the radio network controller sending the priorities of the first transmission gap pattern sequence and the second transmission gap pattern sequence to the node B through a control signaling of a Node B Application Part (NBAP) protocol layer.

Preferably, before the process of the node B and the terminal using the first transmission gap pattern to generate transmission gaps, the method further comprises: the node B, the terminal and the radio network controller determining modes of the first transmission gap pattern sequence and the second transmission gap pattern sequence in advance.

Preferably, the step of the node B, the terminal and the radio network controller determining the modes of the first transmission gap pattern sequence and the second transmission gap pattern sequence in advance comprises: the radio network controller sending the modes of the first transmission gap pattern sequence and the second transmission gap pattern sequence to the terminal through a control signaling of a radio resource control protocol layer; and the radio network controller sending the modes of the first transmission gap pattern sequence and the second transmission gap pattern sequence to the node B through a control signaling of an NBAP protocol layer.

Preferably, both the first transmission gap pattern sequence and the second transmission gap pattern sequence comprise: a transmission gap pattern sequence identification, a transmission gap pattern sequence measurement purpose, a first transmission gap pattern and/or a second transmission gap pattern.

A node B is provided according to another aspect of the present invention.

The node B according to the present invention comprises: a first generation module, configured to use a first transmission gap pattern sequence, together with a terminal, to generate transmission gaps; a first receiving module, configured to receive a message for indicating a second transmission gap pattern sequence from a radio network controller; a comparing module, configured to compare a priority of the first transmission gap pattern sequence with that of the second transmission gap pattern sequence; and a second generation module, configured to use a transmission gap pattern sequence corresponding to a higher priority indicated by a comparison result, together with the terminal, to generate transmission gaps.

A terminal is provided according to sill another aspect of the presentinvention.

The terminal according to the present invention comprises: a third generation module, configured to use a first transmission gap pattern sequence, together with a node B, to generate transmission gaps; a second receiving module, configured to receive a message for indicating to use a second transmission gap pattern sequence to generate transmission gaps from the node B; and a fourth generation module, configured to use the second transmission gap pattern sequence, together with the node B, to generate transmission gaps.

A system for processing a transmission gap pattern sequence is provided according to still another aspect of the present invention.

The system for processing a transmission gap pattern sequence according to the present invention comprises the above node B and the above terminal.

Through the present invention, the node B and the terminal use the transmission gap pattern sequence of higher priority to generate transmission gaps, which solves the conflict problem of the compressed modes started by the node B in the related art, ensuring the terminal to execute the compressed mode-based inter-carrier frequency measurement or inter-system measurement, and guaranteeing the performance of the system equipment and the communication of the terminal.

### Brief Description of the Drawings

Drawings, provided for further understanding of the present invention and forming a part of the specification, are used to explain the present invention together with embodiments of the present invention rather than to limit the present invention, wherein
Fig. 1 is a schematic diagram of the transmission gap pattern sequence according to the related art;
Fig. 2 is a flow chart of the method for processing a transmission gap pattern sequence according to an embodiment of the present invention;
Fig. 3 is an interactive flow chart of the processing process according to a preferable embodiment 1 of the present invention;
Fig. 4 is an interactive flow chart of the processing process according to a preferable embodiment 2 of the present invention;
Fig. 5 is a structure block diagram of a node B according to an embodiment of the present invention; and
Fig. 6 is a structure diagram of a terminal according to an embodiment of the present invention.

### Detailed Description of the Embodiments

It shall be noted that the embodiments in this application and the features in the embodiments can be mutually combined if there is no conflict. The present invention will be further illustrated hereinafter in conjunction with the exemplary embodiments and accompanying drawings.

According to an embodiment of the present invention, a method for processing a transmission gap pattern sequence is provided. Fig. 2 is a flow chart of a method for processing a transmission gap pattern sequence according to the embodiment of the present invention. The method comprises the following steps from Step S202 and Step S206.

Step S202, during a process of a node B and a terminal using a first transmission gap pattern sequence to generate transmission gaps, the node B receives a message for indicating a second transmission gap pattern sequence from a radio network controller.

Step S204, the node B makes a comparison between a priority of the first transmission gap pattern sequence and that of the second transmission gap pattern sequence.

Step S206, the node B and the terminal use the transmission gap pattern sequence corresponding to a higher priority indicated by a comparison result to generate transmission gaps.

In the related art, if the node B has controlled the terminal to start the compressed mode which is based on the first transmission gap pattern sequence, and then receives the message for starting the compressed mode which is based on the second transmission gap pattern sequence from the radio network controller, conflicts of the two compressed modes happen to the node B. In the embodiment of the present invention, the node B selects the transmission gap pattern sequence of higher priority to generate transmission gaps and starts the compressed mode based on the transmission gap pattern sequence, which can avoid the conflict problem of the two sets of compressed modes, thereby ensuring the terminal to execute the compressed mode-based inter-carrier frequency measurement or inter-system measurement, and guaranteeing the performance of the system equipment and the communication of the terminal.

Preferably, if the comparison result indicates that the priority of the second transmission gap pattern sequence is higher than that of the first transmission gap pattern sequence, the node B and the terminal using the transmission gap pattern sequence corresponding to the higher priority indicated by the comparison result to generate transmission gaps comprises steps that: the node B sends, to the terminal, a message for indicating to use the second transmission gap pattern sequence to generate transmission gaps; the node B and the terminal stop using the first transmission gap pattern sequence to generate transmission gaps; and the node B and the terminal use the second transmission gap pattern to generate transmission gaps.

It shall be noted that in the preferable embodiment, the node B selects the second transmission gap pattern sequence of higher priority according to the priority order to substitute the first transmission gap pattern sequence of lower priority to generate transmission gaps, which solves the defect of the conflict in starting the compressed modes existing in the engineering application and whose implementation way is simple and reliable.

Preferably, after the node B compares the priority of the first transmission gap pattern sequence with that of the second transmission gap pattern sequence, the node B informs the radio network controller that the operation that the node B and the terminal use the second transmission gap pattern to generate transmission gaps is started successfully.

It shall be noted that, in the preferable embodiment, the node B can reply to the radio network controller through a control signaling (compressed mode command response) of an NBAP protocol layer. Through the signaling, the node B informs the radio network controller that the specified set of transmission gap pattern sequence that is required to be started to the terminal has been successfully started. The signaling carries the terminal identification, the transmission gap pattern sequence identification as well as the information indicating that the transmission gap pattern sequence has been successfully started. The preferable embodiment can ensure that the radio network controller can obtain the state that the node B and the terminal generate transmission gaps.

Preferably, if the comparison result indicates that the priority of the first transmission gap pattern sequence is higher than that of the second transmission gap pattern sequence, the node B and the terminal using the transmission gap pattern sequence corresponding to the higher priority after comparison to generate transmission gaps comprises the steps that: the node B and the terminal continue using the first transmission gap pattern sequence to generate transmission gaps.

It shall be noted that in the preferable embodiment, the node B selects the first transmission gap pattern sequence of higher priority according to the priority order to generate transmission gaps which solves the defect of the conflict in starting the compressed modes occurring in the engineering application and whose implementation way is simple and reliable.

Preferably, after the node B compares the priority of the first transmission gap pattern sequence with that of the second transmission gap pattern sequence, the node B informs the radio network controller that the operation that the node B and the terminal use the second transmission gap pattern to generate transmission gaps fails to be started.

It shall be noted that, in the preferable embodiment, the node B can reply to the radio network controller through a control signaling (compressed mode command response) of an NBAP protocol layer. Through the signaling, the node B informs the radio network controller that another specified set of transmission gap pattern sequence that is required to be started to the terminal has not been successfully started The signaling carries the terminal identification, the transmission gap pattern sequence identification, the information indicating that the set of transmission gap pattern sequence has not been successfully started, and the duration during which the radio network controller is forbidden to send the compressed mode command with the same contents again. After receiving the compressed mode command response, the radio network controller knows that the set of transmission gap pattern sequence is not successfully started. Within the duration, during which the radio network controller is forbidden to send the compressed mode command with the same contents, from the time when the compressed mode command response is received, the radio network controller will not send the compressed mode command with the same contents. The preferable embodiment can ensure that the radio network controller can obtain the state that the node B and the terminal generate transmission gaps.

Preferably, before the node B and the terminal use the first transmission gap pattern sequence to generate transmission gaps, the node B, the terminal and the radio network controller determine the priorities of the first transmission gap pattern sequence and the second transmission gap pattern sequence in advance.

It shall be noted that in the preferable embodiment, the priorities of the transmission gap pattern sequences can be used to adjust the order of the transmission gap pattern sequences so that the node B can judge whether the transmission gap pattern sequence will be used to generate transmission gaps.

Preferably, the node B, the terminal and the radio network controller determining the priorities of the first transmission gap pattern sequence and the second transmission gap pattern sequence in advance comprises: the radio network controller sends the priorities of the first transmission gap pattern sequence and the second transmission gap pattern sequence to the terminal through a control signaling of a Radio Resource Control (RRC) protocol layer; and the radio network controller sends the priorities of the first transmission gap pattern sequence and the second transmission gap pattern sequence to the node B through a control signaling of a Node B Application Part (NBAP) protocol layer.

It shall be noted that in the preferable embodiment, the unification of the priorities of the transmission gap pattern sequences in the node B, the terminal and the radio network controller is achieved through the sending of the priorities of the first transmission gap pattern sequence and the second transmission gap pattern sequence by the radio network controller. The implementation way is simple and convenient.

Preferably, before the node B and the terminal use the first transmission gap pattern sequence to generate transmission gaps, the node B, the terminal and the radio network controller determine modes of the first transmission gap pattern sequence and the second transmission gap pattern sequence in advance.

It shall be noted that the communication among the node B, the terminal and the radio network controller can be realized either through the mode of the first transmission gap pattern sequence or the mode of the second transmission gap pattern sequence. When the node B, the terminal and the radio network controller decide to use the first transmission gap pattern sequence or the second transmission gap pattern sequence to generate transmission gaps, only the message for indicating to adopt the first transmission gap pattern sequence or the second transmission gap pattern sequence to generate transmission gaps needs to be sent without sending the mode of the first transmission gap pattern sequence or the mode of the second transmission gap pattern sequence. Therefore, the preferable embodiment can reduce the information transmission in the network and avoid format transmission error of the transmission gap pattern sequence.

Preferably, the node B, the terminal and the radio network controller determining the modes of the first transmission gap pattern sequence and the second transmission gap pattern sequence in advance comprises the steps that: the radio network controller sends the modes of the first transmission gap pattern sequence and the second transmission gap pattern sequence to the terminal through a control signaling of an RRC protocol layer; and the radio network controller sends the modes of the first transmission gap pattern sequence and the second transmission gap pattern sequence to the node B through a control signaling of an NBAP protocol layer.

It shall be noted that in the preferable embodiment, the unification of the formats of the transmission gap pattern sequences in the node B, the terminal and the radio network controller is achieved through the sending of the modes of the first transmission gap pattern sequence and the second transmission gap pattern sequence by the radio network controller. The implementation way is simple and convenient.

Preferably, both the first transmission gap pattern sequence and the second transmission gap pattern sequence comprise: the transmission gap pattern sequence identification, the transmission gap pattern sequence measurement purpose and the first transmission gap pattern and/or the second transmission gap pattern.

It shall be noted that the transmission gap pattern sequence identification, the transmission gap pattern sequence measurement purpose and the first transmission gap pattern and/or the second transmission gap pattern are necessary to the process that the node B and the terminal generate the transmission gaps. In addition, the first transmission gap pattern and/or the second transmission gap pattern can provide the transmission gap information within one transmission gap pattern length.

The implementation process of the embodiments of the present invention will be illustrated in detail hereinafter in conjunction with the examples.

It shall be noted that, a High Speed Shared Control Channel (HS-SCCH) is a control channel in the downlink direction which can be used to carry the information required by the demodulation of a High Speed Downlink Shared Channel (HS-DSCH). The node B can send an HS-SCCH order to the terminal through the HS-SCCH to order the terminal to make the corresponding control.

The HS-SCCH order has three bits to express the type of the HS-SCCH order and has three bits to express the specific HS-SCCH order under the type. The existing art only uses two HS-SCCH order types with values of 0 and 1.

The following embodiments will use the new HS-SCCH order type with the value of 2 to express to "start" the compressed mode. The following embodiments will use the new HS-SCCH order type with the value of 3 to express to "Stop" the compressed mode. The following embodiments will use the three bits for expressing the specific HS-SCCH order under the type, and specifically the following embodiments will use the values from 1 to 7 of these three bits to express the transmission gap pattern sequence identification for identifying the transmission gap pattern sequence.

### Preferable embodiment 1

The preferable embodiment 1 describes that during the process that the terminal and the node B generate transmission gaps according to the description of the transmission gap pattern sequence, identified by the transmission gap pattern sequence identification 1, of higher priority, the node B receives the transmission gap pattern sequence, identified by the transmission gap pattern sequence identification 6, of lower priority from the radio network controller, then the terminal and the node B continue generating transmission gaps according to the description of the set of transmission gap pattern sequence, identified by the transmission gap pattern sequence identification 1, of higher priority

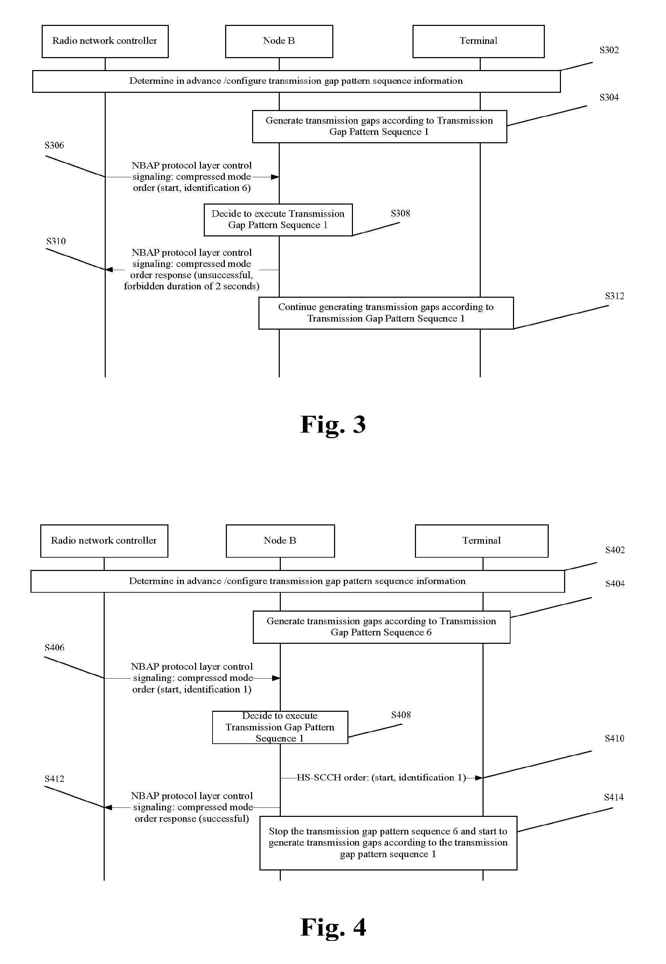

Fig. 3 is an interactive flow chart for the processing process of the preferable embodiment of the present invention. The process comprises the following steps from Step S302 to Step S312.

Step S302: the terminal, the node B and the radio network controller determine the information of the transmission gap pattern sequence of starting the compressed mode and the priority information of each set of transmission gap pattern sequence in advance.

Or the radio network controller configures the terminal with the information of the transmission gap pattern sequence of starting compressed mode and the priority information of each transmission gap pattern sequence through the control signaling of the RRC protocol layer, and the radio network controller configures the node B with the information of the transmission gap pattern sequence of starting compressed mode and the priority information of each transmission gap pattern sequence through the control signaling of the NBAP protocol layer.

Specifically, the information of the transmission gap pattern sequence of starting the compressed mode comprises contents as follows.

The first set of transmission gap pattern sequence, used for the measurement purpose of frequency division duplex measurement and the transmission gap pattern sequence identification is 1. This set of transmission gap pattern sequence contains two kinds of alternate transmission gap patterns, i.e. Transmission Gap Pattern 1 and Transmission Gap Pattern 2. Each kind of transmission gap pattern provides one transmission gap within one transmission gap pattern length.

The second set of transmission gap pattern sequence, used for the measurement purpose of the initial identification of GSM Base Station Identity Code (BSIC) and the transmission gap pattern sequence identification is 6. This set of transmission gap pattern sequence contains two kinds of alternate transmission gap patterns, i.e. Transmission Gap Pattern 1 and Transmission Gap Pattern 2. Each kind of transmission gap pattern provides two transmission gaps within one transmission gap pattern length.

Specifically, the priority information of each set of transmission gap pattern sequence comprises contents as follows.

The priority of the first set of transmission gap pattern sequence with the transmission gap pattern sequence identification of 1 is 1 (the higher priority).

The priority of the second transmission gap pattern sequence with the transmission gap pattern sequence identification of 6 is 6 (the lower priority).

The priority of the first set of transmission gap pattern sequence with the transmission gap pattern sequence identification of 1 is higher than that of the second set of transmission gap pattern sequence with the transmission gap pattern sequence identification of 6.

Step S304: the terminal and the node B have generated the transmission gaps according to the description of the set of transmission gap pattern sequence identified by the transmission gap pattern sequence identification 1.

Step S306: the node B receives the control signaling (compressed mode order) of the NBAP protocol layer sent by the radio network controller. Through the signaling, the radio network controller informs the node B that the specified transmission gap pattern sequence identified by the transmission gap pattern sequence identification 6 is required to be started to the terminal. The signaling carries the terminal identification, the action of starting the compressed mode, and the transmission gap pattern sequence identification of 6.

Step S308: the node B compares the priority of the set of transmission gap pattern sequence identified by the transmission gap pattern sequence identification 1 currently started with that of the specified set of transmission gap pattern sequence, identified by the transmission gap pattern sequence identification 6, required to be started by the radio network controller to the terminal. The node B selects the transmission gap pattern sequence of higher priority according to the priority order, and finally determines that the transmission gap pattern sequence to be executed is the set of transmission gap pattern sequence identified by the transmission gap pattern sequence identification 1.

Step S310: the node B replies to the radio network controller through the control signaling (compressed mode order response) of the NBAP protocol layer. Through the signaling, the node B informs the radio network controller that the transmission gap pattern sequence, identified by the transmission gap pattern sequence identification6, required to be started to the terminal has not been successfully started. The signaling carries the terminal identification, the transmission gap pattern sequence identification 6, the information that the set of transmission gap pattern sequence has not been successfully started, and the information that the duration during which the radio network controller is forbidden to send the compressed mode command with the same contents again being 2 seconds. After receiving the compressed mode order response, the radio network controller knows the set of transmission gap pattern sequence has not been successfully started and will not send compressed mode orders with the same contents within the duration of 2 seconds from the time of receiving the compressed mode order response.

Step S312: the terminal and the node B continue generating transmission gaps according to the description of the set of transmission gap pattern sequence identified by the transmission gap pattern sequence identification 1.

It shall be noted that, in the preferable embodiment 1, the node B continues using the transmission gap pattern sequence of higher priority to generate transmission gaps when receiving the transmission gap pattern sequence of lower priority from the radio network controller, which solves the conflict problem of the compressed modes started by the node B in the related art, thereby ensuring the terminal to execute the compressed mode-based inter-carrier frequency measurement or inter-system measurement and guaranteeing the performance of the system equipment and the communication of the terminal and whose implementation mode is simple and reliable.

### Preferable embodiment 2

The preferable embodiment 2 describes that during the process that the terminal and the node B generate transmission gaps according to the description of the transmission gap pattern sequence, identified by the transmission gap pattern sequence identification 6, of lower priority, the node B receives the transmission gap pattern sequence, identified by the transmission gap pattern sequence identification 1, of higher priority from the radio network controller, then the terminal and the node B generate transmission gaps according to the description of the transmission gap pattern sequence, identified by the transmission gap pattern sequence identification 1, of higher priority instead of that of the transmission gap pattern sequence, identified by the transmission gap pattern sequence identification 6, of lower priority.

Fig. 4 is an interactive flow chart of the processing process of the preferable embodiment of the present invention. The process comprises the following steps from Step S402 to Step S414.

Step S402: the terminal, the node B and the radio network controller determine the information of the transmission gap pattern sequence of starting compressed mode and the priority information of each set of transmission gap pattern sequence in advance.

Or the radio network controller configures the terminal with the information of the transmission gap pattern sequence of starting compressed mode and the priority information of each transmission gap pattern sequence through the control signaling of the RRC protocol layer, and the radio network controller configures the node B with the information of the transmission gap pattern sequence of starting compressed mode and the priority information of each transmission gap pattern sequence through the control signaling of the NBAP protocol layer.

Specifically, the information of the transmission gap pattern sequence of starting the compressed mode comprises contents as follows.

The first set of transmission gap pattern sequence, used for the measurement purpose of frequency division duplex measurement and the transmission gap pattern sequence identification is 1. This set of transmission gap pattern sequence contains two kinds of alternate transmission gap patterns, i.e. Transmission Gap Pattern 1 and Transmission Gap Pattern 2. Each kind of transmission gap pattern provides one transmission gap within one transmission gap pattern length.

The second set of transmission gap pattern sequence, used for the measurement purpose of the initial identification of GSM Base Station Identity Code (BSIC) and the transmission gap pattern sequence identification is 6. This set of transmission gap pattern sequence contains two kinds of alternate transmission gap patterns, i.e. Transmission Gap Pattern 1 and Transmission Gap Pattern 2. Each kind of transmission gap pattern provides two transmission gaps within one transmission gap pattern length.

Specifically, the priority information of each set of transmission gap pattern sequence comprises contents as follows.

The priority of the first set of transmission gap pattern sequence with the transmission gap pattern sequence identification of 1 is 1 (the higher priority).

The priority of the second transmission gap pattern sequence with the transmission gap pattern sequence identification of 6 is 6 (the lower priority).

The priority of the first set of transmission gap pattern sequence with the transmission gap pattern sequence identification of 1 is higher than that of the second set of transmission gap pattern sequence with the transmission gap pattern sequence identification of 6.

Step S404: the terminal and the node B have generated transmission gaps according to the description of the transmission gap pattern sequence identified by the transmission gap pattern sequence identification 6.

Step S406: the node B receives the control signaling (compressed mode order) of the NBAP protocol layer sent by the radio network controller. Through the signaling, the radio network controller informs the node B that the specified transmission gap pattern sequence identified by the transmission gap pattern sequence identification 1 is required to be started to the terminal. The signaling carries the terminal identification, the action of starting the compressed mode, and the transmission gap pattern sequence identificationof 1.

Step S408: the node B compares the priority of the set of transmission gap pattern sequence identified by the transmission gap pattern sequence identification 6 currently started with that of the specified set of transmission gap pattern sequence, identified by the transmission gap pattern sequence identification 1, required to be started by the radio network controller to the terminal. The node B selects the transmission gap pattern sequence of higher priority according to the priority order, and finally determines that the transmission gap pattern sequence to be executed is the set of transmission gap pattern sequence identified by the transmission gap pattern sequence identification 1.

Step S410: the node B informs the terminal of the action of starting the compressed mode and the identification of the transmission gap pattern sequence to be started by sending an HS-SCCH order through the HS-SCCH physical channel. Wherein, the action of starting the compressed mode is expressed by the new HS-SCCH order type with the value of 2; the started transmission gap pattern sequence is identified by the transmission gap pattern sequence identification 1, and the transmission gap pattern sequence identification 1 is expressed by the three bits, for indicating the specific HS-SCCH order under the type, with the value of 1.

Step S412: the node B replies to the radio network controller through the control signaling (compressed mode order response) of the NBAP protocol layer. Through the signaling, the node B informs the radio network controller that the transmission gap pattern sequence, identified by the transmission gap pattern sequence identification 1, required to be started to the terminal has been successfully started. The signaling carries the terminal identification, the transmission gap pattern sequence identification 1, the information that the set of transmission gap pattern sequence has been successfully started.

Step S414: the terminal and the node B stop the transmission gap pattern sequence identified by the transmission gap pattern sequence identification 6, and generate transmission gaps according to the description of the transmission gap pattern sequence identified by the transmission gap pattern sequence identification 1.

It shall be noted that, in the preferable embodiment 2, the node B and the terminal use the transmission gap pattern sequence of higher priority received from the radio network controller instead of the transmission gap pattern sequence of lower priority currently used to generate transmission gaps, which solves the conflict problem of the compressed modes started by node B in the related art, thereby ensuring the terminal to execute the compressed mode-based inter-carrier frequency measurement or inter-system measurement, and guaranteeing the performance of the system equipment and the communication of the terminal.

It shall be noted that the steps shown in the flow chart of the accompanying drawings can be performed in a computer system which comprises a set of computers capable of executing commands. Moreover, although a logical order is shown in the flow chart, under some circumstances, the shown or described steps can also be executed in a different order.

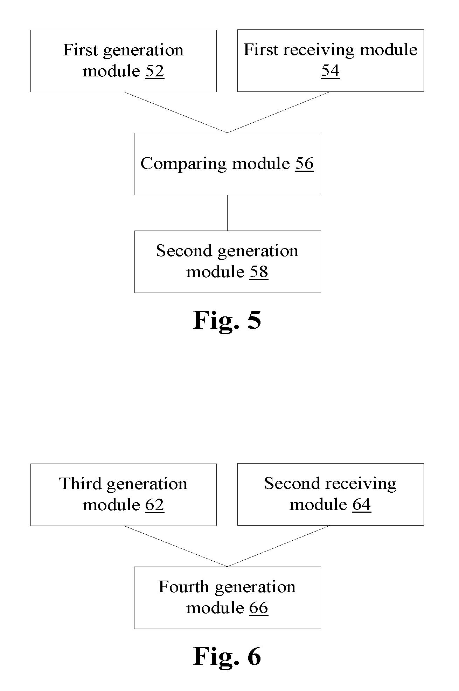

According to an embodiment of the present invention, a node B is provided which can be used to realize the above-mentioned method of the processing the transmission gap pattern sequence. Fig. 5 is a structure block diagram of a node B according to the embodiment of the present invention. The node B comprises a first generation module 52, a first receiving module 54, a comparing module 56 and a second generation module 58. The structure will be described in detail hereinafter.

The first generation module 52 is configured to use the first transmission gap pattern sequence to generate transmission gaps together with a terminal; the receiving module 54 is configured to receive a message for indicating a second transmission gap pattern sequence from a radio network controller; the comparison module 56, connected with the first generation module 52 and the first receiving module 54, is configured to compare the priority of the first transmission gap pattern sequence used by the first generation module 52 with that of the second transmission gap pattern sequence received by the first receiving module 54; the second generation module 58, connected to the comparing module 56, is configured to generate transmission gaps using the transmission gap pattern sequence corresponding to the higher priority indicated by the comparison result of the comparison module 56 together with the terminal.

In the related art, if the node B has controlled the terminal to start the compressed mode which is based on the first transmission gap pattern sequence and receives a message for starting the compressed mode which is based on the second transmission gap pattern sequence from the radio network controller, conflicts of the two compressed modes happen to the node B. In the embodiment of the present invention, the node B compares the priority through the comparing module 56 and selects the transmission gap pattern sequence of higher priority to generate transmission gaps so as to start the compressed mode based on the transmission gap pattern sequence, which avoids the conflict problem of the compressed modes, thereby ensuring the terminal to execute the compressed mode-based inter-carrier frequency measurement or inter-system measurement, and guaranteeing the performance of the system equipment and the communication of the terminal.

According to an embodiment of the present invention, a terminal is also provided, which can be used to realize the above-mentioned processing method of the transmission gap pattern sequence. Fig. 6 is a structure diagram of the terminal according to the embodiment of the present invention. The terminal comprises a third generation module 62, a second receiving module 64 and a fourth generation module 66. The structure is described in detail in the following.

The third generation module 62 is configured to generate transmission gaps by using the first transmission gap pattern sequence together with node B; the second receiving module 64 is configured to receive a message for indicating that the second transmission gap pattern sequence will be used to generate transmission gaps from the node B; the fourth generation module 66, connected to the third generation module 62 and the second receiving module 64 is configured to generate transmission gaps by using the second transmission gap pattern sequence received by the second receiving module 64 instead of the first transmission gap pattern sequence used by the third generation module 62 together with the node B.

According to an embodiment of the present invention, a system for processing transmission gap pattern sequence is also provided. The system can be used to realize the above-mentioned method for processing transmission gap pattern sequence. The system comprises the above-mentioned node B containing the first generation module 52, the first receiving module 54, the comparing module 56 and the second generation module 58 as well as the above-mentioned terminal containing the third generation module 62, the second receiving module 64 and the fourth generation module 66.

It shall be noted that: the node B, the terminal and the system for processing the transmission gap pattern sequence described in the above-mentioned device embodiments corresponds to the above-mentioned method embodiments, and the specific implementation process thereof has been illustrated in details in the method embodiments, so there is no need to repeat it herein.

To sum up, according to the above-mentioned embodiments of the present invention, a method, device and system for processing a transmission gap pattern sequence is provided. The transmission gap pattern sequence to be finally executed is selected through the priority order. Specifically, transmission gaps are generated by using the transmission gap pattern sequence of higher priority, which avoids the conflict problem of the compressed modes in related art, thereby ensuring the terminal to execute the compressed mode-based inter-carrier frequency measurement or inter-system measurement, and guaranteeing the performance of the system equipment and the communication of the terminal.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A method for processing a transmission gap pattern sequence, **characterized by** comprising:
during a process of a node B and a terminal using a first transmission gap pattern sequence to generate transmission gaps, the node B receiving a message for indicating a second transmission gap pattern sequence from a radio network controller;
the node B comparing a priority of the first transmission gap pattern sequence with that of the second transmission gap pattern sequence; and
the node B and the terminal using a transmission gap pattern sequence corresponding to a higher priority indicated by a comparison result to generate transmission gaps.

2. The method as claimed in Claim 1, **characterized in that** if the comparison result indicates that the priority of the second transmission gap pattern sequence is higher than that of the first transmission gap pattern sequence, the step of the node B and the terminal using the transmission gap pattern sequence corresponding to the higher priority indicated by the comparison result to generate transmission gaps comprises:
the node B sending, to the terminal, a message for indicating to use the second transmission gap pattern sequence to generate transmission gaps;
the node B and the terminal stopping using the first transmission gap pattern sequence to generate transmission gaps; and
the node B and the terminal using the second transmission gap pattern to generate transmission gaps.

3. The method as claimed in Claim 2, **characterized in that** after the step of the node B comparing the priority of the first transmission gap pattern sequence with that of the second transmission gap pattern sequence, the method further comprises:
the node B informing the radio network controller that an operation that the node B and the terminal use the second transmission gap pattern sequence to generate transmission gaps is started successfully.

4. The method as claimed in Claim 1, **characterized in that** if the comparison result indicates that the priority of the first transmission gap pattern sequence is higher than that of the second transmission gap pattern sequence, the step of the node B and the terminal using the transmission gap pattern sequence corresponding to the higher priority indicated by the comparison result to generate transmission gaps comprises:
the node B and the terminal continuing using the first transmission gap pattern sequence to generate transmission gaps.

5. The method as claimed in Claim 4, **characterized in that** after the step of the node B comparing the priority of the first transmission gap pattern sequence with that of the second transmission gap pattern sequence, the method further comprises:
the node B informing the radio network controller that an operation that the node B and the terminal use the second transmission gap pattern sequence to generate transmission gaps fails to be started.

6. The method as claimed in any one of Claims 1 to 4, **characterized in that** before the process of the node B and the terminal using the first transmission gap pattern to generate transmission gaps, the method further comprises:
the node B, the terminal and the radio network controller determining the priorities of the first transmission gap pattern sequence and the second transmission gap pattern sequence in advance.

7. The method as claimed in Claim 6, **characterized in that** the step of the node B, the terminal and the radio network controller determining the priorities of the first transmission gap pattern sequence and the second transmission gap pattern sequence in advance comprises:
the radio network controller sending the priorities of the first transmission gap pattern sequence and the second transmission gap pattern sequence to the terminal through a control signaling of a radio resource control protocol layer; and
the radio network controller sending the priorities of the first transmission gap pattern sequence and the second transmission gap pattern sequence to the node B through a control signaling of a Node B Application Part (NBAP) protocol layer.

8. The method as claimed in any one of Claims 1 to 5, **characterized in that** before the process of the node B and the terminal using the first transmission gap pattern to generate transmission gaps, the method further comprises:
the node B, the terminal and the radio network controller determining modes of the first transmission gap pattern sequence and the second transmission gap pattern sequence in advance.

9. The method as claimed in Claim 8, **characterized in that** the step of the node B, the terminal and the radio network controller determining the modes of the first transmission gap pattern sequence and the second transmission gap pattern sequence in advance comprises:
the radio network controller sending the modes of the first transmission gap pattern sequence and the second transmission gap pattern sequence to the terminal through a control signaling of a radio resource control protocol layer; and
the radio network controller sending the modes of the first transmission gap pattern sequence and the second transmission gap pattern sequence to the node B through a control signaling of an NBAP protocol layer.

10. The method as claimed in any one of Claims 1 to 5, **characterized in that** both the first transmission gap pattern sequence and the second transmission gap pattern sequence comprise:
a transmission gap pattern sequence identification, a transmission gap pattern sequence measurement purpose, a first transmission gap pattern and/or a second transmission gap pattern.

11. A node B, **characterized by** comprising:
a first generation module, configured to use a first transmission gap pattern sequence, together with a terminal, to generate transmission gaps;
a first receiving module, configured to receive a message for indicating a second transmission gap pattern sequence from a radio network controller;
a comparing module, configured to compare a priority of the first transmission gap pattern sequence with that of the second transmission gap pattern sequence; and
a second generation module, configured to use a transmission gap pattern sequence corresponding to a higher priority indicated by a comparison result, together with the terminal, to generate transmission gaps.

12. A terminal, **characterized by** comprising:
a third generation module, configured to use a first transmission gap pattern sequence, together with a node B, to generate transmission gaps;
a second receiving module, configured to receive a message for indicating to use a second transmission gap pattern sequence to generate transmission gaps from the node B; and
a fourth generation module, configured to use the second transmission gap pattern sequence, together with the node B, to generate transmission gaps.

13. A system for processing a transmission gap pattern sequence, **characterized by** comprising the node B as claimed in Claim 11 and the terminal as claimed in Claim 12.
